# EUROPEAN PATENT SPECIFICATION

(11) **EP 0 664 950 B1**
(45) Date of publication and mention of the grant of the patent: **05.04.2000**
(21) Application number: 95200176.6
(22) Date of filing: 25.01.1995
(51) Int. Cl.: A01K 1/06

(54) **Feeding fence**
Fütterungsgitter
Cornaois d'affouragement

(30) Priority: 28.01.1994 NL 9400142
(43) Date of publication of application: 02.08.1995
(73) Proprietor: DE BOER STALINRICHTINGEN B.V., NL-8938 AD Leeuwarden (NL)
(72) Inventor: Roorda, Age Dirk, NL-9089 BK Wytgaard (NL); Doornbosch, Jan Jaap, NL-9254 AJ Hardegarijp (NL); Wildschut, Gerben, NL-8915 DM Leeuwarden (NL)
(74) Representative: 't Jong, Bastiaan Jacobus

(56) References cited:
- EP-A- 0 322 023
- NL-A- 9 000 107
- US-E- R E32 728

## Description

The present invention relates to a feeding fence comprising:
- an upper beam and a lower beam having therebetween at least one passage for the head of an animal;
- a swivel bar, wherein each passage is bounded on one side by an edge fence part and on the opposite side by said swivel bar arranged to swivel to and from a passage opening position, in which the upper part of the swivel bar is more distant from the edge fence part than the lower part for passage of the head of the animal, and at least a catching position, in which the lower and upper parts of the swivel bar are substantially equally distant from the edge fence part for catching the head of the animal in the fence or for closing off the passage; and
- locking means inside one of said beams for locking an end of said swivel bar in said catching position thereof when moving thereto, said locking means comprising at least one lock acting on said end and a control rod slidably arranged inside said one of said beams and acting on said lock and bearing a carrier member opposite said edge fence part relative to said swivel bar to move said swivel bar from the open position to said catching position by shifting the control rod.

Such a feeding fence is known from EP-A-0,322,023, where the swivel bar is moveable between only the open position and the catching position thereof. A single latch is provided to lock the swivel bar in the catching position in a corresponding arrangement of the control rod in the beam.

The known feeding fence has for a disadvantage, that a downed animal has to be put on its feet, before it can be freed, after it has collapsed. Once put back on its feet the animal can be released by swivelling the swivel bar to the opened position thereof. Especially for larger animals, such as cows, this is cumbersome and even dangerous for the cow as well as the farm hand.

From US-E-32,728 a feeding fence is known, wherein the swivel bar can attain a downed animal release position opposite the open position relative to the catching position. The locking means herein comprise a control bar arranged outside and above the upper beam, where the top end of the swivel bar is provided with plates extending along the upper beam and the control bar on respective opposite sides thereof. A pair of latches extend rotatably from the top of the plates in a downward direction to bolt on the control bar. Here the latches can easily disengage the bolts under pressure on the swivel bar, thus freeing the swivel bar to leave the catching position. Furthermore animals, and in particular cows, can surprisingly use tongue and ears to tamper with the latches to free themselves from the fence with the swivel bar in the catching position.

The present invention relates to solving the above mentioned problems of the prior art by providing a feeding fence distinguished by a further swivelled position for downed animal release, in which the lower part of the swivel bar is more distant from the edge fence part than the upper part, and in that said locking means comprise at least two locks opposite each other relative to said swivel bar in said catching position, where said locks are rotatably connected to said one of said beams on the inside thereof.

By provision of the second latch inside said one of said beams, the swivel bar is effectively and reliably held in the catching position, as long as this is desirable. The additional third downed cattle release position is provided without the possibility, that the swivel bar can move from the catching position to either the open position of the downed cattle release position while tampering with the latches by an animal is effectively prevented. Thus locking the swivel bar in the catching position, when desired, and effectively preventing tampering with the latches by the animals, while providing a downed cattle release position, is achieved with the present invention.

A suitable embodiment is herein characterized in claim 2. With a single sliding rod a large number of operating modes of the fence can be adjusted. When both locks are placed in the inactive position the swivel bar can move freely back and forth between the open position and the further swivelled position so that the cattle are obstructed to the minimum extent. When the second lock is placed in the inactive position and the first remains in the active position, the swivel bar can swivel freely between the open position and the middle position. In this position a new animal can get used to the idea that it must push its head through the passage opening at the top and can then move its head downward to reach the fodder and can free itself again from the fence in reverse direction.

When both locks are in the active position and the swivel bars stand initially in the open position, the animals are held fast as soon as they place their head through the fence. In this situation the fence can in addition be closed in the above described manner by locking all swivel bars in the middle position.

If an animal has lain down with its head through the passage opening and can thereby no longer free itself, the second lock can be moved into the non-active position with the control rod, whereby the swivel bar can move to the further swivelled position and the animal can withdraw its head from the passage opening at the bottom.

The locks can preferably be operated individually so that the swivel bar can be unlocked as desired at the location of one passage opening, for instance to release an animal.

A further favourable development is characterized in claim 3. If, assuming the operating mode in which both locks are inactive, it is desired to close the fence to the cattle, all swivel bars can be placed from both the further swivelled position and the open position into the middle position and locked therein by suitable operation of the control rod. The operative therefore only has to operate the control rod and does not have to walk along the fence to place the separate swivel bars in the middle position. In such an operation all swivel bars will first be swivelled back from the further swivelled position to beyond the middle position by placing the second carrier member in engagement with these bars and shifting it, whereafter all swivel bars fall into the open position. The control rod is then operated such that the first carrier members carry all swivel bars to the middle position. The locks are simultaneously moved into the active position, whereby the swivel bars are locked into the middle position and the fence is closed.

A favourable embodiment is characterized in claim 4. By embodying the lock as a separate assembly unit which is mounted against an upper surface of the upper beam, the usual screw bolts extending transversely through the profile beam and serving as hinge pins for the locks can be omitted. The inner space of the profile beam is hereby utilized more efficiently so that the extra space needed for the control cams of the locks is available. The additional advantage is achieved that the side surfaces of the upper beam are free of protruding bolt heads or nuts so that operatives and animals cannot become hooked up on them or injure themselves thereon.

By applying the step of claim 5 a very simple assembly of the feeding fence according to the invention is achieved wherein the lock can be operated individually via the opening in the threaded shaft. The number of machinings of the upper beam, and thereby the cost thereof, is limited. Only one hole has to be punched into the upper surface of the upper beam for each lock. Fitting of the lock only takes very little time.

A favourable further development is characterized in claim 6. The pressure piece functions as press-button for individually moving the relevant lock from the active to the inactive position. Operation can hereby take place without danger of the finger with which the lock is operated being snagged thereon.

The invention is further elucidated in the following description with reference to the embodiments shown in the figures.

Fig. 1 is a perspective view of a feeding fence according to the invention.

Fig. 2 is a partly broken away detail view according to arrow II in fig. 1.

Fig. 3A-E show respectively a broken away top view and four broken away side views in different operating modes of the part of the feeding fence corresponding with fig. 2.

Fig. 4 shows views corresponding with fig. 3 of an embodiment variant.

Fig. 5 and 6 show two embodiment variants of locks for use in a feeding fence according to the invention.

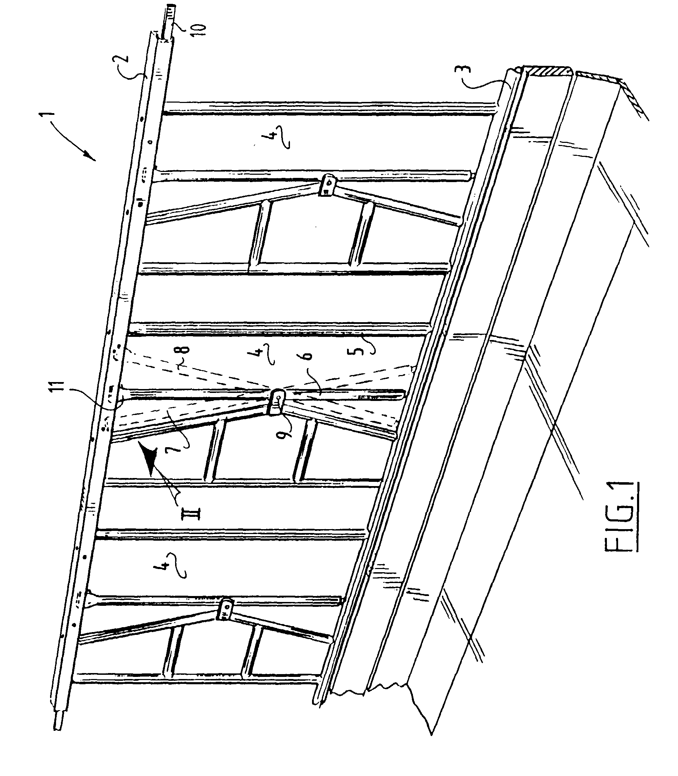

The feeding fence 1 according to the invention shown in fig. 1 comprises an upper beam 2 and a lower beam 3 having therebetween a number of passage openings 4 for the head of an animal. Three passage openings are shown in fig. 1. The fence 1 can comprise a large number of passage openings and can optionally be constructed from segments which are mutually coupled.

Each passage opening 4 is bounded on one side, in fig. 1 the right-hand side, by a fixed edge fence part 5 and on the other side by a swivel bar 6 which is hingedly connected slightly below the middle to an adjoining fixed part of fence 1.

At the location of the middle passage opening 4 the positions are indicated between which swivel bar 6 can move. The position swivelled to the left designated with 7 is referred to in the following as the open position, and the position swivelled to the right designated with 8 is referred to as the further swivelled position. The position in which the bar 6 is drawn in fig. 1 in full lines is called the middle position.

In the open position an animal can push its head through passage opening 4 at the top. When it moves its head downward in order to reach fodder lying behind the fence, the animal presses with its neck against the part of the swivel bar lying below hinge 9 and therein swivels this from the open position to the middle position. As will be further described below, the locking means mainly limit the swivelling movement of the swivel bar between the open position and the middle position. In order to release itself from the fence the animal moves its head upward again and, in the case the swivel bar 6 is freely movable, the animal can withdraw its head again from the fence at the top through the passage opening 4. When an animal falls or has lain down, it can normally not stand up again if its head is held fast in the fence. In that case the locking means are operated such that swivel bar 6 can move to the further swivelled position 8 so that the animal can withdraw its head from the fence through the passage opening 4 at the bottom.

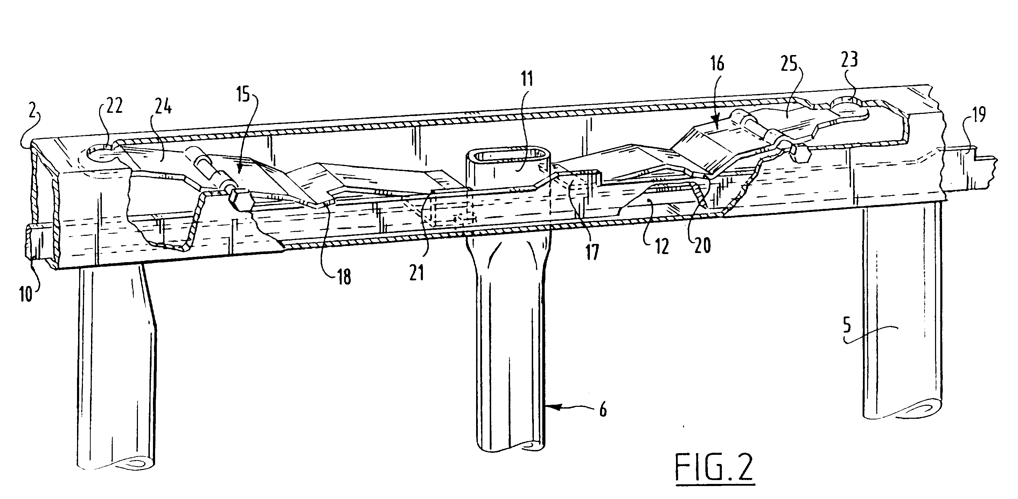

As shown in fig. 2, the upper beam 2 in this embodiment of the feeding fence has a C-profile, wherein the slot 12 faces downward. The top end 11 of swivel bar 6 is flattened and protrudes through slot 12 into the interior of upper beam 12.

The locking means co-acting with this top end 11 of swivel bar 6 comprise a first lock 15 and a second lock 16. A control rod 10 is further received slidably in longitudinal direction in profile 2, which rod is provided with cams 17, 19 which co-act with respective bearing surfaces 18, 20 of the respective locks 15, 16. The locks 15, 16 can be lifted by the cams 17, 19 from the active position shown in fig. 2, in which they can influence the movement of the swivel bar 6, to a non-active position in which swivel bar 6 is released.

The control rod 10 is provided in addition to the cams 17, 19 with a carrier 21 which extends over the slot 12 and can thus come into engagement with the end 11 of swivel bar 6 when the sliding rod 10 is moved to the right as seen in the figures.

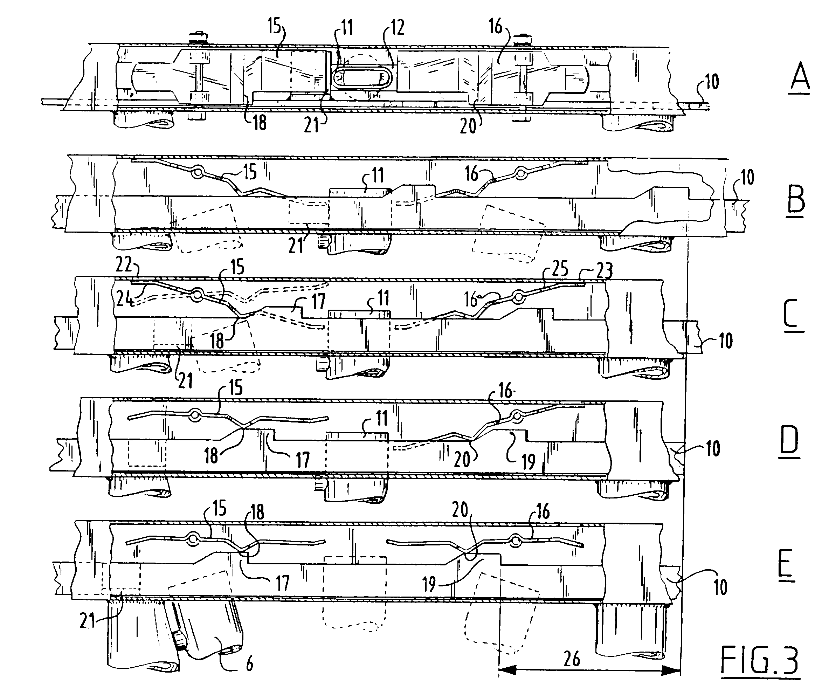

The operation of the locking means and the carrier member are elucidated hereinbelow with reference to fig. 3.

Fig. 3A shows a top view of the locking means and the carrier member 21. It can be seen that the bearing surfaces 18, 20 co-acting with the cams on sliding rod 10 protrude to the sides into the path of movement of the cams and that the part of the locks 15, 16 co-acting with the end 11 of the swivel bar lies out of reach of the sliding rod 10.

Fig. 3B corresponds with the situation as drawn in fig. 2. Herein both locks 15, 16 are in the active position and the carrier member 21 has moved just to the right to move swivel bar 6 into the middle position.

In fig. 3E the sliding rod 10 has moved wholly to the left relative to the situation of fig. 3B, wherein carrier member 21 is placed out of reach of swivel bar 6 and both cams 17, 19 of sliding rod 10 are in engagement with the respective bearing surfaces 18, 20 of locks 15, 16, whereby these are raised. In the situation of fig. 3E the swivel bar 6 can move freely between the open position and the further swivelled position.

In the operational position of fig. 3D the sliding rod 10 is moved a small distance to the right relative to the position of fig. 3E. Since the distance between the cams 17 and 19 is greater than the distance between the bearing surfaces 18, 20, the cam 19 has come out of engagement with bearing surface 20, while the cam 17 is however still in contact with bearing surface 18. The second lock 16 hereby enters the active state while the first lock 15 remains in the inactive state. It will be apparent that in the operational position of fig. 3D the swivel bar 6 can still move freely between the open and the middle position and back again. If the swivel bar is in the further swivelled position when the operational state 3D is adjusted this swivel bar can still swivel back to the middle and the open position since the lock 15 is lifted during such a movement. An opposing movement is however prevented by the lock 16. The position of fig. 3D is called a "teaching position" because this position is used to accustom new cattle to the feeding fence. In this position the cattle can place their head freely through the passage opening and withdraw it from the fence.

In the operational position of fig. 3C the sliding rod 10 is once again shifted a small distance to the right, whereby the cam 17 also comes out of engagement with the bearing surface 18 of the first lock 15. The first lock 15 hereby also enters the active position. In this operational position the swivel bar, if this is in the open position, can swivel to the middle position since the first lock 15 is therein lifted, but after reaching the middle position the lock 15 falls back and the swivel bar is thus held fixedly in this middle position. The swivel bar can otherwise also be moved from the further swivelled position into the middle position and locked in this middle position.

This position is used if it is desired to hold the cattle fast in the fence. As soon as an animal has pushed its head through the passage opening and has swivelled the swivel bar in the middle position, it can no longer pull itself out of the fence. This operational position can be used when it is wished to secure one particular animal, for instance to have it undergo a treatment. Other animals which are also secured in the fence can be released individually therefrom by operating lock 15 manually. For this purpose the lock 15 is extended beyond its hinge point with a part 24 which, when lock 15 is displaced, thus moves downward from the active to the inactive position. This part 24 is accessible through an opening 22 in the upper surface of the upper beam 2. Via the hole 22 an operative can move the lock 15 with a finger into the inactive position drawn in dashed lines, whereby the swivel bar is released and the animal can withdraw its head from the fence.

The same can take place with the lock 16. By pressing via hole 23 onto the extended part 25 of lock 16 this latter can be placed in the inactive position so that the bar can be moved from the middle position into the further swivelled position. This option is used to free an animal that has fallen or lain down, while the other animals remain secured.

The position of fig. 3C, wherein both locks 15, 16 are in the active position, is also used to close the fence to the animals. If the swivel bars are locked into the middle position the animals cannot push their head through the passage openings.

As noted above, the control rod 10 is provided with the carrier member 21 in order to move the swivel bar from the open position into the middle position and to lock it between the locks 15, 16. For this purpose the control rod 10 is moved a distance to the right relative to the position of fig. 3C, wherein the carrier member comes into engagement with the end 11 of the swivel bar and moves it to the right until it comes up against the end of the second lock 16. As the figure shows, the cams 17 and 19 are embodied such that during this displacement they remain out of engagement with the bearing surfaces 18 and 20 of the locks. The locks hereby remain in the active position.

The total stroke of the sliding rod 10 is shown with arrow 26.

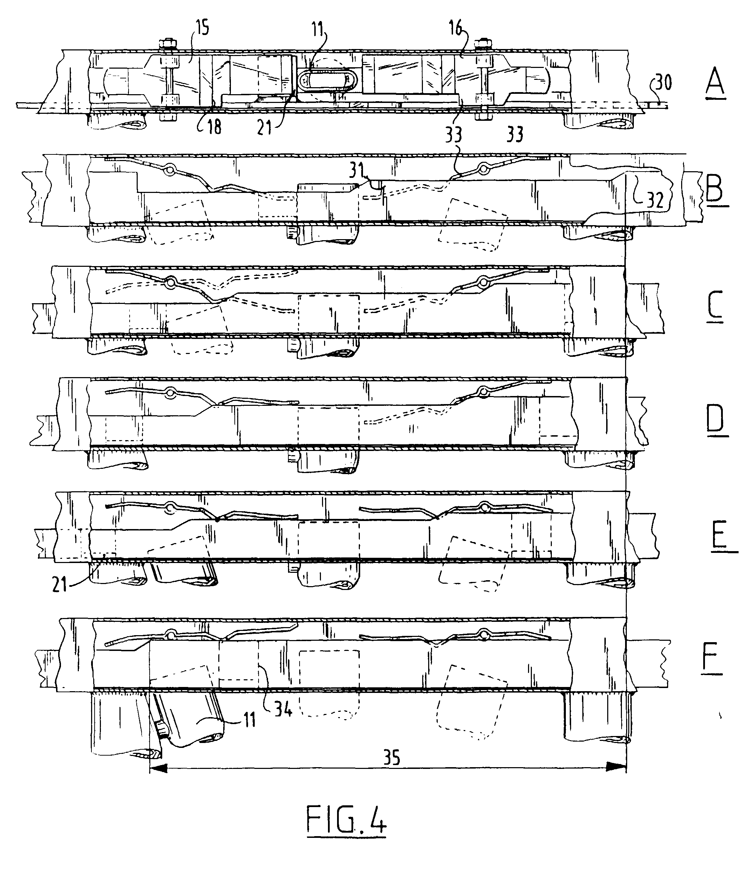

The further developed embodiment of fig. 4 largely corresponds with that of fig. 3, so that corresponding reference numerals are used. The control rod 30 is embodied otherwise than control rod 10 such that the cam 32 for operating the second lock 16 is located at a higher level. In similar manner the bearing surface 33 of the second lock 16 co-acting with cam 32 is also located at a higher level. Thus is achieved that when moving past the second lock 16 the control cam 31 for the first lock 15 remains out of contact with the bearing surface 33 of the second lock. The operating modes of fig. 4B, C, D, E further correspond fully with those of fig. 3B, C, D, E. Further description thereof can therefore be dispensed with.

In the embodiment of fig. 4 a further operating mode is possible as shown in fig. 4F. The sliding rod 30 is provided with a second carrier member 34 on the side of swivel bar 6 facing toward the edge fence part 5. By shifting the control rod 30 to the left as seen in fig. 4, this second carrier member 34 moves the end 11 of the swivel bar to the left and thus moves this from the further swivelled position to the open position. The control cams for the first and second locks are herein embodied as shown in the figures such that the locks are held in a position in which this movement of the top end 11 of the swivel bar is not obstructed.

Due to the added operating mode of fig. 4F an operative can move all swivel bars out of the further swivelled position. When it is desired for instance to adjust one of the other positions of fig. B, C or D from the position of fig. 4E, an operative will first move the sliding rod 30 from the position of fig. 4E wholly to the left into the position of fig. 4F, whereby all swivel bars which may be in the further swivelled position are moved into the open position. The sliding rod 30 can thereafter be moved back into one of the positions shown in fig. 4B, C or D. All swivel bars then stand with certainty in the desired position. The total stroke of the control rod is indicated with arrow 35. This can in practice be smaller, since the swivel bar, when it is moved back by the carrier member from the further swivelled position to the open position, only has to be moved slightly beyond the middle position. The swivel bar then falls automatically further into the open position.

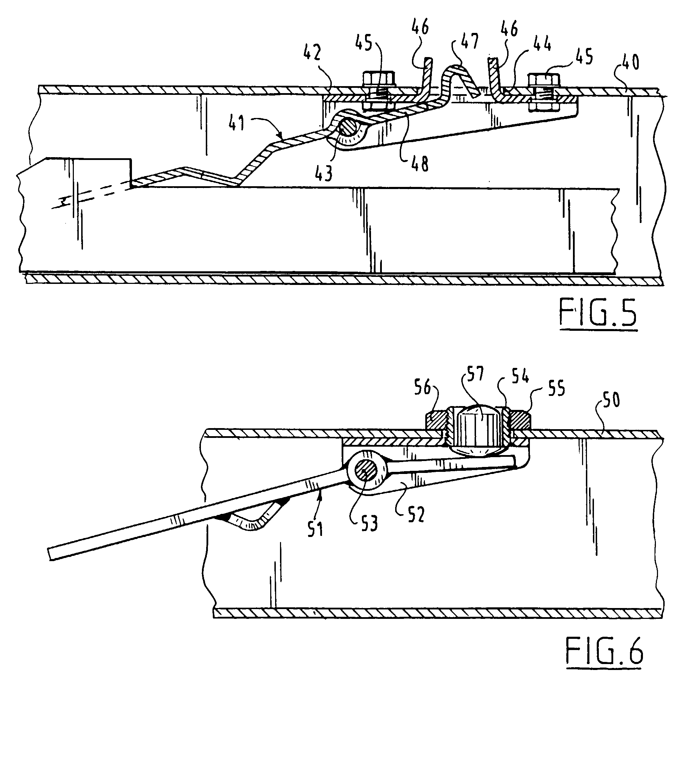

Fig. 5 shows a preferred embodiment of a lock, the supporting construction of which occupies only little space in the interior of the upper beam 40, so that the control rod can be embodied such that the cams thereof co-acting with the locks are dimensioned large enough to enable a good and reliable operation.

The locking unit 41 comprises a lock pivoting through a hinge pin 43 in a bracket 42. This bracket 42 is mounted against the upper surface of the beam 40 using bolts 45. Through use of the bracket 42 the locking unit 41 can be given a narrower form than locks 15, 16 of the previous embodiments which take up the whole breadth of the beam.

Formed in beam 40 is an actuating hole 44 through which the extended part 48 of the lock can be accessed for individual operation. In this embodiment the bracket is embodied at the position of the hole 44 with standing edges 46 which form a protection for a part 47 of the lock part 48 which is bent into a hook shape and which protrudes above the surface of beam 40. This hook-shaped part 47 is easily accessible so that the individual operation of the lock can take place conveniently. The bent portions 46 form a protection on either side of the hook-shaped part 47 so that unintentional contact with part 47, and thereby unintentional release, is avoided.

In the embodiment of fig. 6 the upper beam 50 is provided with only one hole 55 for mounting of the lock. The locking unit 51 here also comprises a bracket 52 in which the lock pivots with the aid of a hinge pin 53. Connected to bracket 52 is a threaded shaft 54 which is provided with a central bore and which protrudes through hole 55. Onto the portion of the threaded shaft 54 protruding above the beam 50 is screwed a nut 56 with which the bracket 52, and thereby the locking unit 51, is thus mounted against the upper surface of the beam 50.

As shown, a pressure piece 57 is received slidably in the bore of the threaded shaft 54. By pressing on the pressure piece from above the lock can be individually operated.

In order to prevent the pressure piece 57 from falling out the stroke of the locking unit 51 can be limited by for instance arranging a cam 58 on the bracket 52.

The invention is not limited to the embodiments shown. The control cams on the sliding rod do not for instance have to protrude in upward direction. They can also comprise parts protruding to the sides of the control rod. The way in which the sliding rod is placed in the different operational positions can be embodied in any random suitable manner. Direct operation of a part of the sliding rod protruding outside the end of the fence or of a part connected thereto can optionally take place. Another suitable embodiment is a swivel lever which is connected via a control rod to the sliding rod.

## Claims

1. Feeding fence (1) comprising:
- an upper beam (2) and a lower beam (3) having therebetween at least one passage (4) for the head of an animal;
- a swivel bar (6), wherein each passage (4) is bounded on one side by an edge fence part (5) and on the opposite side by said swivel bar (6) arranged to swivel to and from a passage opening position (7), in which the upper part of the swivel bar (6) is more distant from the edge fence part (5) than the lower part for passage of the head of the animal, and at least a catching position, in which the lower and upper parts of the swivel bar (6) are substantially equally distant from the edge fence part (5) for catching the head of the animal in the fence or for closing off the passage; and
- locking means (10, 15, 16) inside one of said beams (2, 3) for locking an end (11) of said swivel bar (6) in said catching position thereof when moving thereto, said locking means comprising at least one lock (15, 16) acting on said end (11) and a control rod (10) slidably arranged inside said one of said beams (2, 3) and acting on said lock (15, 16) and bearing a carrier member (21) opposite said edge fence part (5) relative to said swivel bar (6) to move said swivel bar (6) from the open position (7) to said catching position by shifting the control rod (10),
**characterized**
by a further swivelled position (8) for downed animal release, in which the lower part of the swivel bar (6) is more distant from the edge fence part (5) than the upper part,
and in that said locking means comprise at least two locks (15, 16) opposite each other relative to said swivel bar (6) in said catching position, where said locks (15, 16) are rotatably connected to said one of said beams (2, 3) on the inside thereof.

2. Feeding fence as claimed in claim 1, wherein the locking means further comprise a first lock (15) which in an active situation can allow passage of the swivel bar (6) during a movement in the direction from the open to the further swivelled position but holds the bar in the middle position during a movement in opposite direction, and a second lock (16) which in an active situation can allow passage of the swivel bar (6) during a movement in the direction from the further swivelled to the open position but holds the bar in the middle position during a movement in opposite direction, and the control rod carries control cams (17, 19) for each lock (15, 16) in order to place these at choice, in accordance with a chosen slide position of the control rod (10), into the active or an inactive position out of engagement with the swivel bar (6).

3. Feeding fence as claimed in claim 2, wherein the control cams (31) for the first lock (15) are arranged on the control rod (30) such that they remain out of contact with the second lock (16) during movement past the second lock (16) through sliding of the control rod (30), and that the control rod (30) bears on the side of the swivel bar (6) facing toward the edge fence part a second carrier member (34) which can co-act with the end (11) of the swivel bar (6) in order to move the swivel bar (6) therewith out of the further swivelled position to the middle position by shifting the sliding rod (30).

4. Feeding fence as claimed in any of the foregoing claims, wherein the locking means are accommodated in the upper beam (40, 50) and each lock is hingedly mounted to a bracket (42, 52) which is mounted internally of the upper beam (40, 50) by fastening means (45, 56) against an upper surface thereof.

5. Feeding fence as claimed in claim 4, wherein the fastening means comprise a threaded shaft (54) which is provided with a central bore and which is placed through a hole (55) in the upper surface of the upper beam (50) and onto which is screwed a nut (56), and wherein extending under the bore is a lock part which moves downward when the lock is displaced from the active to the inactive position.

6. Feeding fence as claimed in claim 5, wherein a pressure piece (57) is received slidably in the bore.

## Patentansprüche

1. Fütterungsgitter (1) mit:
- einem oberen Träger (2) und einem unteren Träger (3), die dazwischen wenigstens einen Durchgang (4) für den Kopf eines Tieres haben;
- einer Schwenkstange (6), wobei jeder Durchgang (4) an einer Seite begrenzt ist durch ein Randgitterteil (5) und auf der gegenüberliegenden Seite durch die Schwenkstange (6), die derart angeordnet ist, daß sie auf eine Durchgangsöffnungsstellung (7) zu- und von dieser wegschwenken kann, in der der obere Teil der Schwenkstange (6) entfernter von dem Randgitterteil (5) ist als der untere Teil zum Durchlaß des Kopfes des Tieres und wenigstens einer Fangstellung, in welcher der untere und der obere Teil der Schwenkstange (6) im wesentlichen gleich beabstandet sind von dem Randgitterteil (5) zum Fangen des Kopfes des Tieres im Gitter oder zum Abschließen des Durchgangs; und
- Sperreinrichtungen (10, 15, 16) im Inneren eines der Träger (2, 3) zum Sperren bzw. Verriegeln eines Endes (11) der Schwenkstange (6) in deren Fangstellung bei Bewegung darauf zu, wobei die Sperreinrichtungen wenigstens eine Sperre (15, 16) umfassen, die auf das Ende (11) wirkt und eine Steuerstange (10), die verschiebbar im Inneren des einem der Träger (2, 3) angeordnet ist und auf die Sperre (15, 16) wirkt und ein Trägerteil (21) trägt, das dem Randgitterteil (5) in Relation zur Schwenkstange (6) gegenüberliegt, um die Schwenkstange (6) aus der offenen Stellung (7) durch Verschieben der Steuerstange (10) in die Fangstellung zu bewegen,
**gekennzeichnet**
durch eine weitergeschwenkte Stellung (8) für das Freigeben abliegender Tiere, in der der untere Teil der Schwenkstange (6) von dem Randgitterteil (5) entfernter ist als der obere Teil und
daß die Sperreinrichtungen wenigstens wenigstens zwei Sperren (15, 16) umfassen, die relativ zu der Schwenkstange (6) in der Fangstellung einander gegenüberliegen, wobei die Sperren (15, 16) an dem Inneren des einen der Träger (2, 3) drehbar angeschlossen sind.

2. Fütterungsgitter nach Anspruch 1, wobei die Sperreinrichtungen desweiteren eine erste Sperre (15) umfassen, die in einer aktiven Situation einen Durchgang der Schwenkstange (6) während einer Bewegung in Richtung von der offenen zur weitergeschwenkten Stellung gestatten kann, jedoch die Stange während einer Bewegung in die entgegengesetzte Richtung in der mittleren Stellung hält, sowie eine zweite Sperre (16), die in einer aktiven Situation den Durchgang der Schwenkstange (6) während einer Bewegung in der Richtung von der weitergeschwenkten Stellung in die offene Stellung gestatten kann, jedoch die Stange während einer Bewegung in die entgegengesetzte Richtung in der mittleren Stellung hält, und wobei die Steuerstange Steuerkämme bzw. -nocken (17, 19) für jede Sperre (15, 16) trägt, um diese wahlweise in Übereinstimmung mit einer gewählten Verschiebestellung der Steuerstange (10) in die aktive oder eine inaktive Stellung außer Eingriff mit der Schwenkstange (6), plaziert.

3. Fütterungsgitter nach Anspruch 2, wobei die Steuerkämme bzw. -nocken (31) für die erste Sperre (15) auf der Steuerstange (30) derart angeordnet sind, daß sie während der Bewegung vorbei an der zweiten Sperre (16) durch Verschieben der Steuerstange (30), mit der zweiten Sperre (16) außer Kontakt bleiben, und daß die Steuerstange (30) an der Seite der Schwenkstange (6), die in Richtung des Randgitterteils (5) weist, ein zweites Trageteil (34) trägt, das mit dem Ende (11) der Schwenkstange (6) zusammenwirken kann, um die Schwenkstange (6) damit durch Verschieben der Schiebestange (30) aus der weitergeschwenkten Stellung in die mittlere Stellung zu bewegen.

4. Fütterungsgitter nach einem der vorstehenden Ansprüche, wobei die Sperreinrichtungen in dem oberen Träger (40, 50) aufgenommen sind und jede Sperre schwenkbar an einer Klammer (42, 52) montiert ist, die im Inneren des oberen Trägers (40, 50) durch Befestigungsmittel (45, 56), an dessen oberen Oberfläche montiert ist.

5. Fütterungsgitter nach Anspruch 4, wobei die Befestigungsmittel einen Gewindeschaft (54) umfassen, der mit einer zentralen Bohrung versehen ist und durch ein Loch (55) in der oberen Oberfläche des oberen Trägers (50) angeordnet ist und auf den eine Mutter (56) geschraubt ist, und wobei sich unter der Bohrung ein Sperrteil erstreckt, das sich nach unten bewegt, wenn die Sperre aus der aktiven in die inaktive Stellung versetzt wird.

6. Fütterungsgitter nach Anspruch 5, wobei ein Druckteil (57) verschiebbar in der Bohrung aufgenommen ist.

## Revendications

1. Barrière d'alimentation (1) comprenant :
- une poutre supérieure (2) et une poutre inférieure (3) ayant entre elles au moins un passage (4) pour la tête d'un animal ;
- une barre pivotante (6), dans laquelle chaque passage (4) est limitée d'un côté par une partie de barrière formant rebord (5) et, sur le côté opposé, par ladite barre pivotante (6) agencée pour pivoter vers et depuis une position d'ouverture de passage (7), dans laquelle la partie supérieure de la barre pivotante (6) est plus éloignée de la partie de barrière formant rebord (5) que la partie inférieure pour le passage de la tête de l'animal, et au moins une position de prise, dans laquelle les parties inférieure et supérieure de la barre pivotante (6) sont sensiblement à égale distance de la partie de barrière formant rebord (5) pour saisir la tête de l'animal dans la barrière ou pour fermer le passage ; et
- des moyens de verrouillage (10, 15, 16) placés à l'intérieur d'une desdites poutres (2, 3) pour verrouiller une extrémité (11) de ladite barre pivotante (6) dans ladite position de prise de celle-ci lorsqu'elle se déplace vers celle-ci, lesdits moyens de verrouillage comprenant au moins un verrou (15, 16) agissant sur ladite extrémité (11) et une tige de commande (10) agencée de manière coulissante à l'intérieur de ladite une desdites poutres (2, 3) et agissant sur ledit verrou (15, 16) et supportant un organe de support (21) opposé à ladite partie de barrière formant rebord (5) par rapport à ladite barre pivotante (6) pour déplacer ladite barre pivotante (6) de la position ouverte (7) à ladite position de prise en agissant sur la tige de commande (10),
caractérisée par une position davantage pivotée (8) pour libérer l'animal couché, dans laquelle la partie inférieure de la barre pivotante (6) est plus éloignée de la partie de barrière formant rebord (5) que la partie supérieure,
et en ce que lesdits moyens de verrouillage comprennent au moins deux verrous (15, 16) opposés l'un à l'autre par rapport à ladite barre pivotante (6) dans ladite position de prise, dans laquelle lesdits verrous (15, 16) sont raccordés de manière rotative à ladite une desdites poutres (2, 3) sur l'intérieur de celle-ci.

2. Barrière d'alimentation selon la revendication 1, dans laquelle les moyens de verrouillage comprennent en outre un premier verrou (15) qui, dans une situation active, peut permettre le passage de la barre pivotante (6) pendant un mouvement dans la direction allant de la position ouverte à la position davantage pivotée mais maintient la barre dans la position intermédiaire pendant un mouvement dans la direction opposée, et un second verrou (16) qui, dans une situation active, peut permettre le passage de la barre pivotante (6) pendant un mouvement dans la direction allant de la position davantage pivotée à la position ouverte mais qui maintient la barre dans la position intermédiaire pendant un mouvement dans la direction opposée, et la tige de commande supporte les camés de commande (17, 19) pour chaque verrou (15, 16) afin de placer ceux-ci à un emplacement au choix, conformément à une position coulissante choisie de la tige de commande (10), dans la position active ou une position inactive hors de prise avec la barre pivotante (6).

3. Barrière d'alimentation selon la revendication 2, dans laquelle les cames de commande (31) pour le premier verrou (15) sont agencées sur la tige de commande (30), de telle sorte qu'elles restent hors de contact avec le second verrou (16) pendant le mouvement au-delà du second verrou (16) par coulissement de la tige de commande (30), et de telle sorte que la tige de commande (30) s'appuie sur le côté de la barre pivotante (6) tournée, vers la partie de barrière formant rebord, vers un second organe de support (34) qui agit conjointement avec l'extrémité (11) de la barre pivotante (6) afin de déplacer la barre pivotante (6) avec celle-ci hors de la position davantage pivotée vers la position intermédiaire en agissant sur la tige coulissante (30).

4. Barrière d'alimentation selon l'une quelconque des revendications précédentes, dans laquelle les moyens de verrouillage sont logés dans la poutre supérieure (40, 50) et chaque verrou est monté de manière articulée sur un support (42, 52) qui est monté à l'intérieur de la poutre supérieure (40, 50) à l'aide de moyens de fixation (45, 56) en appui contre une surface supérieure de celle-ci.

5. Barrière d'alimentation selon la revendication 4, dans laquelle les moyens de fixation comprennent un arbre fileté (54) qui est muni d'un alésage central et qui est placé à travers un trou (55) ménagé dans la surface supérieure de la poutre supérieure (50) et sur lequel est vissé un écrou (56), et dans laquelle se trouve une partie de verrou qui se déplace vers le bas s'étendant sous l'alésage lorsque le verrou est déplacé de la position active à la position inactive.

6. Barrière d'alimentation selon la revendication 5, dans laquelle une pièce de pression (57) est reçue de manière coulissante dans l'alésage.
